# EUROPEAN PATENT APPLICATION

(11) **EP 4 822 577 A1**
(43) Date of publication of application: **14.10.2026**
(21) Application number: 25881606.5
(22) Date of filing: 10.10.2025
(51) Int. Cl.: G06F 30/10, G06F 30/28, G06T 17/00, G06F 111/10, G06F 113/08, G06F 119/08, G06F 119/12, G06F 119/14

(54) **METHOD FOR SOLVING SOLIDIFICATION CHARACTERISTIC PARAMETERS IN SEMI?CONTINUOUS CASTING PROCESS**

(30) Priority: 21.10.2024 CN 202411463410
(71) Applicant: Chinalco Materials Application Research Institute Co., Ltd, Beijing 102209 (CN)
(72) Inventor: WU, Yongfu, Beijing 102209 (CN); YU, Kangcai, Beijing 102209 (CN); ZHU, Heyu, Beijing 102209 (CN); LIU, Shengnan, Beijing 102209 (CN); HUANG, Dongnan, Beijing 102209 (CN); LIU, Cheng, Beijing 102209 (CN)
(74) Representative: V.O.
(86) International application number: PCT/CN2025/126831
(87) International publication number: WO 2026/086602

(57) **Abstract**

The present disclosure belongs to the technical field of semi-continuous casting of metal, and particularly relates to a method for calculating solidification characteristic parameters in a semi-continuous casting process. The method for calculating solidification characteristic parameters in a semi-continuous casting process according to the present disclosure includes: establishing a three-dimensional geometric model according to a casting apparatus and an ingot shape, and then solving a flow field and a temperature field in the semi-continuous casting process based on thermal-fluid coupled numerical simulation; and calculating, after casting reaches a steady state, a cooling curve through a flow line or path line, and then calculating, in combination with the cooling curve, the flow line, or the path line, a plurality of solidification characteristic parameters in the semi-continuous casting process.

## Description

### Cross-Reference to Related Application

The present disclosure claims the priority to Chinese Patent Application No. 202411463410X, filed with the China National Intellectual Property Administration on October 21, 2024 and entitled "Method for calculating solidification characteristic parameters in semi-continuous casting process", which is incorporated in its entirety herein by reference.

### Technical Field

The present disclosure belongs to the technical field of semi-continuous casting of metal, and particularly relates to a method for calculating solidification characteristic parameters in a semi-continuous casting process.

### Background

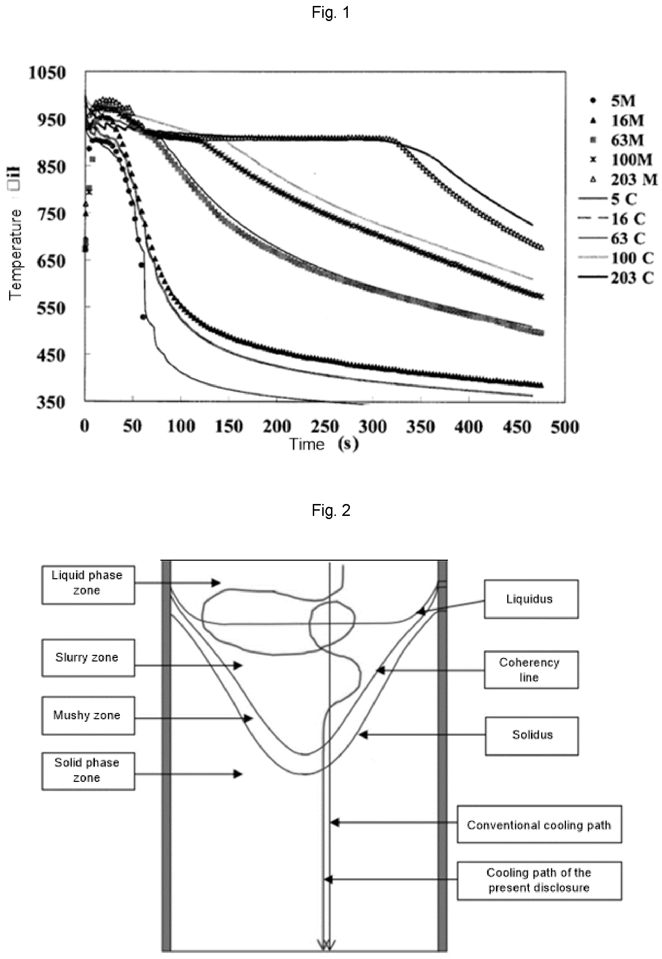

Semi-continuous casting of an aluminum alloy is the most critical process in aluminum processing. Aluminum alloy quality of an ingot largely determines a subsequent processing procedure and final service performance of a product. A cooling curve is a curve with time (t) as the abscissa and temperature (T) as the ordinate, recording a solidification history of each point in the ingot, as shown in Fig. 1. A cooling history or cooling curve of each point in the ingot during solidification serves as an important carrier for studying a solidification behavior of metal.

A plurality of solidification characteristic parameters can be analyzed from the cooling curve. For instance, a solidification solid fraction curve (with time (t) as the abscissa and solid fraction (fs) as the ordinate), solidification time, a cooling rate, hot cracking susceptibility, and other solidification characteristics are further calculated and formed. These solidification characteristics are closely related to ingot porosity, macrosegregation, grain size, and second-phase precipitation. Obtaining an accurate ingot cooling curve is crucial for understanding and studying an ingot defect formation mechanism and evaluating ingot defects.

According to flow characteristics of an aluminum alloy during solidification, there are some key temperature points, namely a liquidus *T*_{L}, a dendrite coherency temperature *T*_{COH}, and a solidus *T*_{S}. Based on the above key points, a solidification process can be divided into a liquid phase zone (*T* > *T*_{L}), a two-phase zone (*T*_{L} ≥*T*≥ *T*_{S}), and a solid phase zone (*T* < *T*_{S}). According to fluidity, the two-phase zone can be further subdivided into a slurry zone (*T*_{L}≥T > *T*_{COH}) and a mushy zone (*T*_{COH}≥T≥*T*_{L}), as shown in Fig. 2. In the slurry zone, primary aluminum starts to nucleate and grow, but no coherency is formed between primary aluminum grains, allowing them to flow with melt. When a temperature falls below the coherency temperature, the primary aluminum grains are coherent to form a dendrite network and can no longer flow, while the remaining liquid phase flows interdendritically.

Existing methods for obtaining an ingot cooling curve are as follows: ① A thermocouple is pre-embedded in a casting mold, after molten metal is poured into the mold, the thermocouple records a temperature history at the given position as solidification proceeds, and meanwhile, the thermocouple becomes embedded in the ingot (with the reference document: Anyalebechi, P.N., Rouns, T.N., Sanders, R.E. (2016). Effects of Cooling Rate and Grain Refining on Constituent Phase Particle Size in As-Cast 3004 Alloy. In: Grandfield, J.F., Eskin, D.G. (eds) Essential Readings in Light Metals. Springer, Cham. https://doi.org/10.1007/978-3-319-48228-6_60). However, this method results in scrapping of a cast product. ② A temperature field of a casting process is calculated through numerical simulation, a temperature history is extracted, and a cooling curve is obtained through processing of the data (a slope or secant slope) (with the reference document: Wu Yongfu, Zhang Baocun, Wang Ning, et al. Effects of Cooling Rate on Eutectic Silicon Modification during DC Semi-Continuous Casting of 4032 Aluminum Alloy Round Ingot [J]. Journal of Aeronautical Materials, 2021,41(02):53-60.). However, these methods fail to consider flow of a solid phase with melt in the slurry zone (above the coherency temperature T_{COH}), leading to results inconsistent with an actual condition. This causes inaccurate calculation of cooling curves and may cause misleading results in solidification research or production guidance.

### Summary

In view of the problems in the related art, the present disclosure provides a method for calculating solidification characteristic parameters in a semi-continuous casting process. Through a method for processing data based on thermal-fluid coupled numerical simulation, internal flow in a slurry zone is fully considered, and a cooling curve of the semi-continuous casting process is accurately calculated. Then, a plurality of solidification characteristic parameters of the semi-continuous casting process are calculated in combination with the cooling curve, a flow line, and a path line.

The present disclosure specifically includes the following content:
The method for calculating solidification characteristic parameters in a semi-continuous casting process includes the following steps:
S1, solving a flow field and a temperature field: establishing a three-dimensional geometric model according to a casting apparatus and an ingot shape, performing thermal-fluid coupled numerical simulation on the semi-continuous casting process, and solving the flow field and the temperature field in the semi-continuous casting process;
S2, calculating a cooling curve: extracting, after casting reaches a steady state, a flow line or a path line of a solidification process with a point in a solidified zone on a cross section of an ingot as an endpoint, exporting node coordinates, a temperature T and time t on the flow line or the path line, and calculating the cooling curve according to the time t and the temperature T on the flow line or the path line; and repeating the above operations to obtain the cooling curve of any point on an entire cross section of the ingot; and
S3, performing data analysis on the cooling curve: performing data analysis on a obtained cooling curve of a point, and obtaining a solidification characteristic parameter of the point. The solidification characteristic parameters include solidification time, a cooling rate, hot cracking susceptibility, and other parameters.

The flow line refers to a curve for describing a movement direction and a velocity of a fluid (molten metal) at a moment. The path line refers to a motion trajectory of a fluid particle (which may be regarded as a tiny unit in the molten metal in an alloy ingot casting process) in a continuous period. The method disclosed in the present disclosure includes two solutions of using the flow line to calculate solidification characteristic parameters in the semi-continuous casting process and using the path line to calculate solidification characteristic parameters in the semi-continuous casting process. The solutions of using the flow line or the path line for calculation all fall within the protection scope of the present disclosure.

In some embodiments of the present disclosure, S3 further includes: analyzing obtained sufficient cooling curves, and obtaining a distribution of the solidification characteristic parameters on the entire cross section of the ingot.

In some embodiments of the present disclosure, the solidification characteristic parameters include the solidification time. The solidification time refers to time required for change from a liquidus temperature T_{L} to a solidus temperature T_{S} in the solidification process. A method for calculating the solidification time is as follows: ${t}_{L - S} = {t}_{S} - {t}_{L}$ where
t_{L-S} denotes the solidification time;
t_{L} denotes time required for a temperature on a flow line or a path line to reach the liquidus temperature T_{L}; and
t_{S} denotes time required for the temperature on the flow line or the path line to reach the solidus temperature T_{S}.

In some embodiments of the present disclosure, the solidification characteristic parameters include the instantaneous cooling rate. A method for calculating the instantaneous cooling rate is as follows: ${\dot{T}}_{i} = \frac{{T}_{i} - {T}_{i + 1}}{{t}_{i} - {t}_{i + 1}}$ where
*Ṫᵢ* denotes an instantaneous cooling rate of an i-th node on a flow line or a path line;
*Tᵢ* denotes a temperature of the i-th node on the flow line or the path line;
*T*_{*i*+1} denotes a temperature of an (i+1)-th node on the flow line or the path line;
*tᵢ* denotes time corresponding to the i-th node on the flow line or the path line; and
*t*_{*i*+1} denotes time corresponding to the (i+1)-th node on the flow line or the path line.

In some embodiments of the present disclosure, the solidification characteristic parameters include a cooling rate within a cooling temperature interval. A method for calculating the cooling rate includes:
a. determining an upper temperature limit and a lower temperature limit of the cooling temperature interval;
b. obtaining time corresponding to the upper temperature limit and time corresponding to the lower temperature limit on a flow line or a path line; and
c. then calculating the cooling rate according to the following formula: $\dot{T} = \frac{{T}_{up} - {T}_{down}}{{t}_{up} - {t}_{down}}$ where
   *Ṫ* denotes a cooling rate of the cooling temperature interval;
   *T*ᵤₚ denotes an upper temperature limit of the cooling temperature interval;
   *T*_{down} denotes a lower temperature limit of the cooling temperature interval;
   *t*ᵤₚ denotes time corresponding to the upper temperature limit on the flow line or the path line; and
   *t*_{down} denotes time corresponding to the lower temperature limit on the flow line or the path line.

In some embodiments of the present disclosure, the calculated cooling rate *Ṫ* is assigned to coordinates of the endpoint of the flow line or the path line, so as to obtain a cooling rate of a point on the cross section of the ingot.

In some embodiments of the present disclosure, the cooling rates of all points on the cross section of the ingot are calculated, so as to obtain a cooling rate distribution of the cross section of the ingot.

In some embodiments of the present disclosure, during study of a preferentially precipitated high-temperature phase in an alloy, a value of *T*ᵤₚ is equal to a precipitation temperature of the high-temperature phase, and a value of *T*_{down} is higher than a temperature corresponding to a solidus of the alloy. The high-temperature phase refers to an alloy that nucleates above a liquidus.

In some embodiments of the present disclosure, during study of a cooling rate of primary aluminum grains within a liquid pool, a value of *T*ᵤₚ is equal to a liquidus temperature *Tₗ*, and a value of *T*_{down} is equal to a solidus temperature *T_{solid}*. The liquid pool refers to an incompletely solidified molten metal zone formed in the ingot during solidification in an alloy ingot casting process due to non-uniformity of cooling conditions.

In some embodiments of the present disclosure, during study of a cooling rate after coherency, a value of *Tᵤₚ* is equal to a dendrite coherency temperature T_{COH}, and a value of *T*_{down} is equal to a solidus temperature *T_{solid}.*

In some embodiments of the present disclosure, the solidification characteristic parameters include the hot cracking susceptibility. A method for calculating the hot cracking susceptibility is as follows: $HCS = \frac{{t}_{V}}{{t}_{R}} = \frac{{t}_{99} - {t}_{90}}{{t}_{90} - {t}_{40}}$ where
*HCS* denotes the hot cracking susceptibility, and the hot cracking susceptibility refers to a ratio of duration of a vulnerable stage in a late solidification period to duration of a stress relief stage;
*t*_{V} denotes the duration of the stress relief stage;
*t*_{R} denotes the duration of the vulnerable stage in the late solidification period;
*t*₉₉ denotes time corresponding to a solid fraction reaching 99%;
*t*₉₀ denotes time corresponding to a solid fraction reaching 90%; and
*t*₄₀ denotes time corresponding to a solid fraction reaching 40%.

The present disclosure has the following beneficial effects:
(1) The method for calculating solidification characteristic parameters in a semi-continuous casting process according to the present disclosure includes: establishing the three-dimensional geometric model according to the casting apparatus and the ingot shape, and then solving the flow field and the temperature field in the semi-continuous casting process based on thermal-fluid coupled numerical simulation; and calculating, after casting reaches the steady state, the cooling curve through the flow line or the path line, and then calculating, in combination with the cooling curve, the flow line, or the path line, the plurality of solidification characteristic parameters in the semi-continuous casting process. In the present disclosure, the internal flow in the slurry zone in the semi-continuous casting process is fully considered during calculation of the cooling curve. The obtained cooling curve is more accurate than that obtained through existing methods in the related art.
(2) The method for calculating solidification characteristic parameters in a semi-continuous casting process according to the present disclosure has wide applicability. The method can be used not only for semi-continuous casting of aluminum alloys, but also for various casting processes of other metal materials, such as continuous casting of steel, semi-continuous casting and horizontal continuous casting of copper alloys, and casting forming processes of cast iron, aluminum alloys, magnesium alloys, copper alloys, and other alloys, including sand casting, permanent mold casting, high-pressure casting, and low-pressure casting.

### Brief Description of the Drawings

Fig. 1 is a schematic diagram of a cooling curve;
Fig. 2 is a comparison diagram of zone division and cooling paths in a semi-continuous casting process;
Fig. 3 is a schematic diagram of flow lines and cooling curves of an ingot;
Fig. 4 is a flow line diagram of a center of an ingot of a 7050 aluminum alloy having a diameter of 400 mm according to some embodiments of the present disclosure;
Fig. 5 is a comparison diagram of cooling curves of a 7050 aluminum alloy having a diameter of 400 mm in some embodiments and comparative examples of the present disclosure;
Fig. 6 is a comparison diagram of instantaneous cooling rates of a 7050 aluminum alloy having a diameter of 400 mm in some embodiments and comparative examples of the present disclosure;
Fig. 7 is a flow line diagram of a slab ingot of a 5083 alloy having a specification of 420×1620 mm according to some embodiments of the present disclosure; and
Fig. 8 is a comparison diagram of cooling rates of a slab ingot of a 5083 alloy having a specification of 420×1620 mm in a thickness direction in some embodiments and comparative examples of the present disclosure.

### Detailed Description of the Embodiments

The method for calculating solidification characteristic parameters in a semi-continuous casting process includes the following steps:
S1, a flow field and a temperature field are solved. Specifically, a three-dimensional geometric model is established according to a casting apparatus and an ingot shape, thermal-fluid coupled numerical simulation is performed on the semi-continuous casting process, and the flow field and the temperature field in the semi-continuous casting process are solved.
S2, a cooling curve is calculated. Specifically, after casting reaches a steady state, a flow line or a path line of a solidification process is extracted with a point in a solidified zone on a cross section of an ingot as an endpoint, node coordinates, a temperature T and time t on the flow line or the path line are exported, and the cooling curve is calculated according to the time t and the temperature T on the flow line or the path line; and the above operations are repeated to obtain the cooling curve of any point on an entire cross section of the ingot.
S3, data analysis is performed on the cooling curve. Specifically, data analysis is performed on a obtained cooling curve of a point, a solidification characteristic parameter of the point is obtained, the obtained sufficient cooling curves are analyzed, and a distribution of the solidification characteristic parameters on the entire cross section of the ingot is obtained.

The solidification characteristic parameters of the present disclosure include solidification time, a cooling rate, and hot cracking susceptibility.
(1) The solidification time refers to time required for change from a liquidus temperature T_{L} to a solidus temperature T_{S} in the solidification process. A method for calculating the solidification time is as follows: ${t}_{L - S} = {t}_{S} - {t}_{L}$ (1) where
   t_{L-S} denotes the solidification time;
   t_{L} denotes time required for a temperature on a flow line or a path line to reach the liquidus temperature T_{L}; and
   t_{S} denotes time required for the temperature on the flow line or the path line to reach the solidus temperature T_{S}.
(2) A method for calculating the instantaneous cooling rate is as follows: ${\dot{T}}_{i} = \frac{{T}_{i} - {T}_{i + 1}}{{t}_{i} - {t}_{i + 1}}$ (2) where
   *Ṫᵢ* denotes an instantaneous cooling rate of an i-th node on a flow line or a path line;
   *Tᵢ* denotes a temperature of the i-th node on the flow line or the path line;
   *T*_{*i*+1} denotes a temperature of an (i+1)-th node on the flow line or the path line;
   *tᵢ* denotes flow line time corresponding to the i-th node on the flow line or the path line; and
   *t*_{*i*+1} denotes flow line time corresponding to the (i+1)-th node on the flow line or the path line.
(3) A method for calculating a cooling rate of a cooling temperature interval includes the following steps:
   a. an upper temperature limit and a lower temperature limit of the cooling temperature interval are determined;
   b. time corresponding to the upper temperature limit and time corresponding to the lower temperature limit are obtained on a flow line or a path line; and
   c. then the cooling rate is calculated according to the following formula:
   $\dot{T} = \frac{{T}_{up} - {T}_{down}}{{t}_{up} - {t}_{down}}$ (3) where
   *Ṫ* denotes a cooling rate of the cooling temperature interval;
   *T*ᵤₚ denotes an upper temperature limit of the cooling temperature interval;
   *T*_{down} denotes a lower temperature limit of the cooling temperature interval;
   *t*ᵤₚ denotes time corresponding to the upper temperature limit on the flow line or the path line; and
   *t*_{down} denotes time corresponding to the lower temperature limit on the flow line or the path line.

The calculated cooling rate *Ṫ* is assigned to coordinates of the endpoint of the flow line, so as to obtain a cooling rate of a point on the cross section of the ingot.

The cooling rates of all points on the cross section of the ingot are calculated, so as to obtain a cooling rate distribution of the cross section of the ingot.

During study of a preferentially precipitated high-temperature phase in an alloy, a value of *T*ᵤₚ is equal to a precipitation temperature of the high-temperature phase, and a value of *T*_{down} is higher than a temperature corresponding to a solidus of the alloy. The high-temperature phase refers to an alloy that nucleates above a liquidus.

During study of a cooling rate of primary aluminum grains within a liquid pool, a value of *T*ᵤₚ is equal to a liquidus temperature *Tₗ*, and a value of *T*_{down} is equal to a solidus temperature *T_{solid}.*

During study of a cooling rate after coherency, a value of *Tᵤₚ* is equal to a dendrite coherency temperature T_{COH}, and a value of *T*_{down} is equal to a solidus temperature *T_{solid}.*

(4) A method for calculating the hot cracking susceptibility is as follows: $HCS = \frac{{t}_{V}}{{t}_{R}} = \frac{{t}_{99} - {t}_{90}}{{t}_{90} - {t}_{40}}$ (4) where
*HCS* denotes the hot cracking susceptibility, and the hot cracking susceptibility refers to a ratio of duration of a vulnerable stage in a late solidification period to duration of a stress relief stage (with the reference document: Nallathambi, A.K., Penumakala, P.K., Specht, E. (2013). Review of Hot Tearing Studies in Al Alloys during Direct Chill Casting. In: Krane, M.J.M., Jardy, A., Williamson, R.L., Beaman, J.J. (eds) Proceedings of the 2013 International Symposium on Liquid Metal Processing & Casting. Springer, Cham. https://doi.org/10.1007/978-3-319-48102-9_40);
*t*_{V} denotes the duration of the stress relief stage;
*t*_{R} denotes the duration of the vulnerable stage in the late solidification period;
*t*₉₉ denotes time corresponding to a solid fraction reaching 99%;
*t*₉₀ denotes time corresponding to a solid fraction reaching 90%; and
*t*₄₀ denotes time corresponding to a solid fraction reaching 40%.

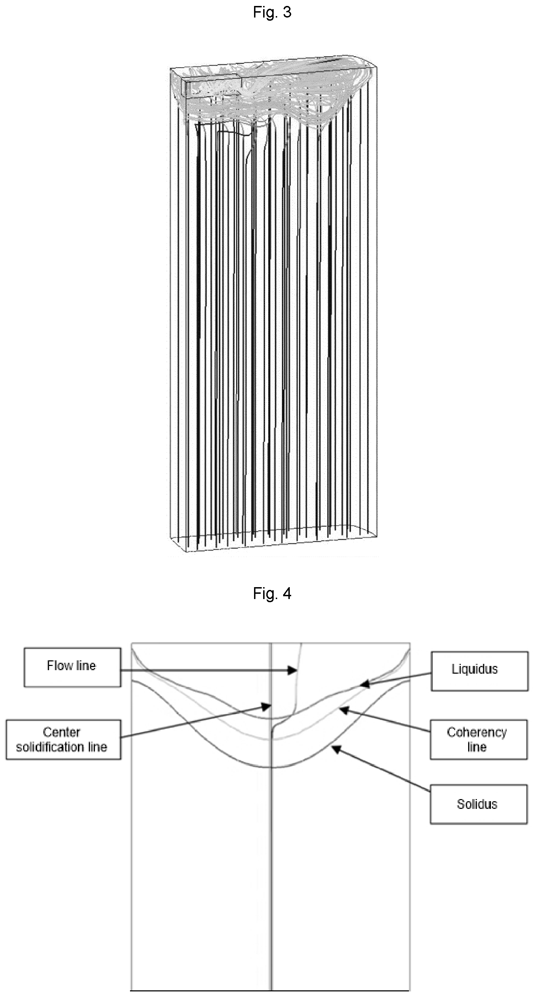

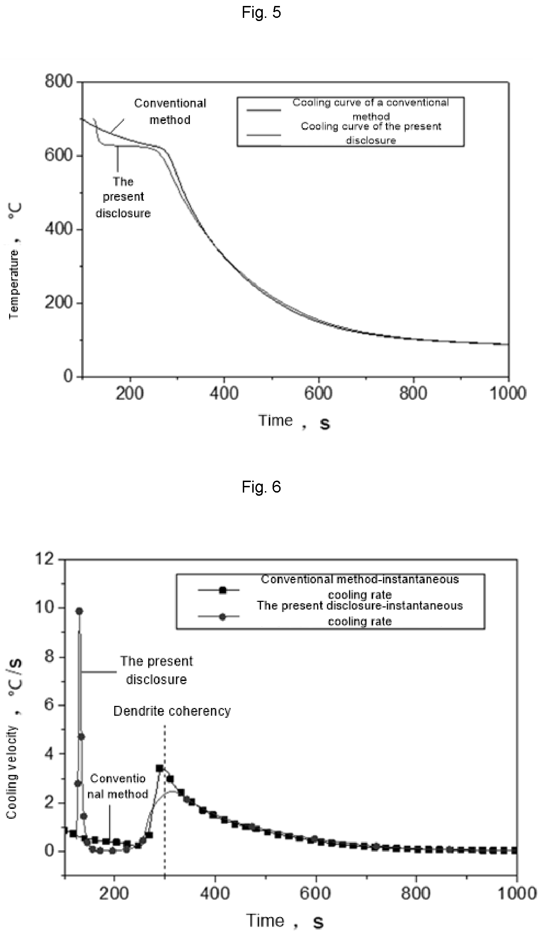

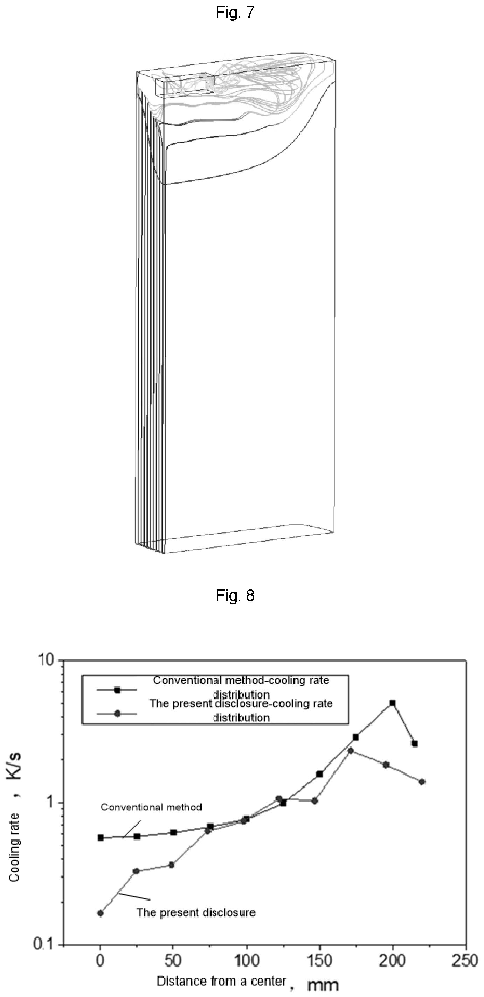

The present disclosure will be described in detail below with reference to Fig. 1 to Fig. 8 and specific embodiments. Fig. 1 is a schematic diagram of a cooling curve. Fig. 2 is a comparison diagram of zone division and cooling paths in a semi-continuous casting process. Fig. 3 is a schematic diagram of flow lines and cooling curves of an ingot. Fig. 4 is a flow line diagram of a center of an ingot of a 7050 aluminum alloy having a diameter of 400 mm according to some embodiments of the present disclosure. Fig. 5 is a comparison diagram of cooling curves of a 7050 aluminum alloy having a diameter of 400 mm in some embodiments and comparative examples of the present disclosure. Fig. 6 is a comparison diagram of instantaneous cooling rates of a 7050 aluminum alloy having a diameter of 400 mm in some embodiments and comparative examples of the present disclosure. Fig. 7 is a flow line diagram of a slab ingot of a 5083 alloy having a specification of 420×1620 mm according to some embodiments of the present disclosure. Fig. 8 is a comparison diagram of cooling rates of a slab ingot of a 5083 alloy having a specification of 420×1620 mm in a thickness direction in some embodiments and comparative examples of the present disclosure. The following embodiments do not limit the invention content described in claims. In addition, all the contents described in the following embodiments are not limited to those essential to the solution of the invention as recited in the claims.

### Embodiment 1

A casting temperature of a 7050 alloy is approximately 700°C. In a semi-continuous casting process, an Al₃Zr phase is precipitated at a temperature higher than a liquidus temperature of the alloy. A cooling rate has a certain influence on precipitation of the Al₃Zr phase. Thus, to investigate a precipitation behavior of the Al₃Zr phase, it is necessary to calculate the cooling rate during solidification.

In some embodiments, the method disclosed in the present disclosure is used to calculate a cooling rate at a core of a round ingot of the 7050 aluminum alloy having a diameter of 400 mm, and includes the following steps:
S1, a flow field and a temperature field are solved. Specifically, a simulation model of a casting process of an aluminum alloy is established, and the temperature field and the flow field from the start of casting to 2000s are solved. In this case, an interior of an ingot reaches a steady state.
S2, a cooling curve is calculated. Specifically, a bottom of the ingot is used as an endpoint, a flow line is extracted, and nodes on the flow line are output. The flow line is as shown in Fig. 4. A temperature and flow line time on the flow line are extracted and processed, to obtain a temperature-time curve in a cooling process, as shown in Fig. 5.
S3, the cooling rate is calculated. Specifically, the cooling rates on adjacent nodes on the flow line are calculated through Formula (2), and results are shown in Fig. 6.

It can be seen from Fig. 6 that within a precipitation temperature range of 630°C to 700°C of the Al₃Zr phase, a maximum cooling rate can reach 10°C/s.

### Embodiment 2

A cooling rate distribution of an ingot has a significant influence on microstructure distribution of the ingot. The ingot has a higher cooling rate at an edge with fine grains, and has a lower cooling rate at a core with coarse grains.

In some embodiments, the method of the present disclosure is used to analyze a cooling rate of a slab ingot of a 5083 ingot having a specification of 420 mm×1620 mm in a thickness direction. The slab ingot has a casting temperature of 700°C, and a casting velocity of 50 mm/min. The method includes the following steps:
S1, a flow field and a temperature field are solved. Specifically, a steady-state simulation model of a casting process of an aluminum alloy is established, and after calculation converges, data of the temperature field and the flow field is extracted.
S2, a flow line is extracted. Specifically, a straight line is drawn based on a center of a bottom of the ingot in a width direction, and 10 points are set on the straight line. A flow line diagram is drawn from the 10 points, as shown in Fig. 7.
S3, in some embodiments, an interval average cooling rate calculation method is used. A temperature interval is defined from a liquidus (=639°C) to a solidus (=450°C) of an alloy. For each flow line, interpolation is performed on *Tᵤₚ* and *T_{down}* to obtain corresponding flow line time *tᵤₚ* and *t_{down}*. A cooling rate of each flow line is calculated according to Formula (3).

The cooling rate of the ingot in the thickness direction according to the embodiment is shown in Fig. 8. Due to presence of a distributor bag for the slab ingot, melt flows out from an outlet of the distributor bag and then flows toward a narrow surface of the ingot, and then flows to a lower portion of a liquid pool and returns to a center of the ingot. That is, after nucleation, a primary phase undergoes long-term motion in the liquid pool, resulting in a low cooling rate. The cooling rate of the center of the ingot is approximately 0.166°C/s.

### Comparative Example 1

In the comparative example, a conventional method is used to calculate a cooling rate of a core of a round ingot of a 7050 aluminum alloy having a diameter of 400 mm, and includes the following steps:
S1, a flow field and a temperature field are solved. Specifically, a simulation model of a casting process of an aluminum alloy is established, and the temperature field and the flow field from the start of casting to 2000s are solved. In this case, an interior of an ingot reaches a steady state. The step is consistent with that in Embodiment 1.
S2, a temperature-time curve of a center of the ingot is extracted, as shown in Fig. 5.
S3, tangent calculation is performed on the temperature-time curve, to obtain the cooling rate, as shown in Fig. 6.

In the comparative example, the cooling rate is lower than 1°C/s within a temperature range of 630°C to 700°C. An initially formed Al₃Zr phase flows with the flow field in melt. A flow velocity of the melt is significantly higher than a casting velocity. Accordingly, the Al₃Zr phase can be rapidly deposited to a bottom of a liquid pool (compared with vertical deposition to the bottom of the liquid pool at the casting velocity). This process requires shorter time, thus achieving a faster cooling rate in a liquid phase.

It can be seen from Fig. 5 and Fig. 6 that a conventional method fails to consider flow of a solid phase with the melt in a slurry zone (above a coherency temperature T_{COH}), which deviates from an actual situation. In the present disclosure, internal flow in a slurry zone in the semi-continuous casting process is fully considered during calculation of the cooling curve. The obtained cooling curve and instantaneous cooling rate are more accurate than those obtained through existing methods in the related art.

### Comparative Example 2

In the comparative example, a conventional method is used to analyze a cooling rate of a slab ingot of a 5083 ingot having a specification of 420 mm×1620 mm in a thickness direction, and includes the following steps:
S1, a steady-state simulation model of a casting process of an aluminum alloy is established. The step is consistent with that in Embodiment 2.
S2, after calculation converges, a temperature-time curve of 10 points (vertically downward in a casting direction) in a thickness direction of the ingot is extracted.
S3, the cooling rate is calculated according to Formula (3), and the obtained cooling rate is as shown in Fig. 8.

It can be seen from Fig. 8 that a conventional method fails to consider flow of a solid phase with melt in a slurry zone, which deviates from an actual situation. In the present disclosure, internal flow in the slurry zone in the semi-continuous casting process is fully considered during calculation of a cooling curve. The obtained cooling rate is more accurate than that obtained through existing methods in the related art.

The above description of the disclosed embodiments enables those skilled in the art to implement or use the present disclosure. Various modifications to the embodiments are readily obvious to those skilled in the art, and general principles defined herein can be implemented in other embodiments without departing from the spirit or scope of the present disclosure. Thus, the present disclosure is not limited to the embodiments shown herein and falls within a widest scope consistent with principles and novel features disclosed herein.

### Industrial Applicability

The solution provided by the embodiments of the present disclosure can be applied to the technical field of semi-continuous casting of metal. In the embodiments of the present disclosure, a three-dimensional geometric model is established according to a casting apparatus and an ingot shape, and then a flow field and a temperature field in a semi-continuous casting process are solved based on thermal-fluid coupled numerical simulation; and after casting reaches a steady state, a cooling curve is calculated through a flow line or path line, and then in combination with the cooling curve, the flow line, or the path line, a plurality of solidification characteristic parameters in the semi-continuous casting process are calculated. In the present disclosure, internal flow in a slurry zone in the semi-continuous casting process is fully considered during calculation of the cooling curve. The obtained cooling curve is more accurate than that obtained through existing methods in the related art.

## Claims

1. A method for calculating solidification characteristic parameters in a semi-continuous casting process, comprising the following steps:
S1, solving a flow field and a temperature field: establishing a three-dimensional geometric model according to a casting apparatus and an ingot shape, performing thermal-fluid coupled numerical simulation on the semi-continuous casting process, and solving the flow field and the temperature field in the semi-continuous casting process;
S2, calculating a cooling curve: extracting, after casting reaches a steady state, a flow line or a path line of a solidification process with a point in a solidified zone on a cross section of an ingot as an endpoint, exporting node coordinates, a temperature T and time t on the flow line or the path line, and calculating the cooling curve according to the time t and the temperature T on the flow line or the path line; and repeating the above operations to obtain the cooling curve of any point on an entire cross section of the ingot; and
S3, performing data analysis on the cooling curve: performing data analysis on an obtained cooling curve of a point, and obtaining a solidification characteristic parameter of the point.

2. The method for calculating solidification characteristic parameters in the semi-continuous casting process as claimed in claim 1, wherein S3 further comprises: analyzing a plurality of obtained cooling curves, and obtaining a distribution of the solidification characteristic parameters on the entire cross section of the ingot.

3. The method for calculating solidification characteristic parameters in the semi-continuous casting process as claimed in claim 1, wherein the solidification characteristic parameters comprise solidification time, the solidification time refers to time required for change from a liquidus temperature T_{L} to a solidus temperature T_{S} in the solidification process, and a method for calculating the solidification time is as follows: ${t}_{L - S} = {t}_{S} - {t}_{L}$ wherein
t_{L-S} denotes the solidification time;
t_{L} denotes time required for a temperature on a flow line or a path line to reach the liquidus temperature T_{L}; and
t_{S} denotes time required for the temperature on the flow line or the path line to reach the solidus temperature T_{S}.

4. The method for calculating solidification characteristic parameters in the semi-continuous casting process as claimed in claim 1, wherein the solidification characteristic parameters comprise an instantaneous cooling rate, and a method for calculating the instantaneous cooling rate is as follows: ${\dot{T}}_{i} = \frac{{T}_{i} - {T}_{i + 1}}{{t}_{i} - {t}_{i + 1}}$ wherein
*Ṫᵢ* denotes an instantaneous cooling rate of an i-th node on a flow line or a path line;
*Tᵢ* denotes a temperature of the i-th node on the flow line or the path line;
*T*_{*i*+1} denotes a temperature of an (i+1)-th node on the flow line or the path line;
*tᵢ* denotes time corresponding to the i-th node on the flow line or the path line; and
*t*_{*i*+1} denotes time corresponding to the (i+1)-th node on the flow line or the path line.

5. The method for calculating solidification characteristic parameters in the semi-continuous casting process as claimed in claim 1, wherein the solidification characteristic parameters comprise a cooling rate within a cooling temperature interval, and a method for calculating the cooling rate comprises:
a. determining an upper temperature limit and a lower temperature limit of the cooling temperature interval;
b. obtaining time corresponding to the upper temperature limit and time corresponding to the lower temperature limit on a flow line or a path line; and
c, then calculating the cooling rate according to the following formula: $\dot{T} = \frac{{T}_{up} - {T}_{down}}{{t}_{up} - {t}_{down}}$ wherein
*Ṫ* denotes a cooling rate of the cooling temperature interval;
*T*ᵤₚ denotes an upper temperature limit of the cooling temperature interval;
*T*_{down} denotes a lower temperature limit of the cooling temperature interval;
*t*ᵤₚ denotes time corresponding to the upper temperature limit on the flow line or the path line; and
*t*_{down} denotes time corresponding to the lower temperature limit on the flow line or the path line.

6. The method for calculating solidification characteristic parameters in the semi-continuous casting process as claimed in claim 5, wherein the calculated cooling rate *Ṫ* is assigned to coordinates of the endpoint of the flow line or the path line, to obtain a cooling rate of a point on the cross section of the ingot.

7. The method for calculating solidification characteristic parameters in the semi-continuous casting process as claimed in claim 6, wherein the cooling rates of all points on the cross section of the ingot are calculated, to obtain a cooling rate distribution of the cross section of the ingot.

8. The method for calculating solidification characteristic parameters in the semi-continuous casting process as claimed in any one of claims 5 to 7, wherein during study of a preferentially precipitated high-temperature phase in an alloy, a value of *T*ᵤₚ is equal to a precipitation temperature of the high-temperature phase, and a value of *T*_{down} is higher than a temperature corresponding to a solidus of the alloy; and the high-temperature phase refers to an alloy that nucleates above a liquidus.

9. The method for calculating solidification characteristic parameters in the semi-continuous casting process as claimed in any one of claims 5 to 7, wherein during study of a cooling rate of primary aluminum grains within a liquid pool, a value of *T*ᵤₚ is equal to a liquidus temperature *Tₗ*, and a value of *T*_{down} is equal to a solidus temperature *T_{solid}.*

10. The method for calculating solidification characteristic parameters in the semi-continuous casting process as claimed in any one of claims 5 to 7, wherein during study of a cooling rate after coherency, a value of *Tᵤₚ* is equal to a dendrite coherency temperature *T_{coh},* and a value of *T_{down}* is equal to a solidus temperature *T_{solid}.*

11. The method for calculating solidification characteristic parameters in the semi-continuous casting process as claimed in claim 1, wherein the solidification characteristic parameters comprise hot cracking susceptibility, and a method for calculating the hot cracking susceptibility is as follows: $HCS = \frac{{t}_{V}}{{t}_{R}} = \frac{{t}_{99} - {t}_{90}}{{t}_{90} - {t}_{40}}$ wherein
*HCS* denotes the hot cracking susceptibility, and the hot cracking susceptibility refers to a ratio of duration of a vulnerable stage in a late solidification period to duration of a stress relief stage;
*t*_{V} denotes the duration of the stress relief stage;
*t*_{R} denotes the duration of the vulnerable stage in the late solidification period;
*t*₉₉ denotes time corresponding to a solid fraction reaching 99%;
*t*₉₀ denotes time corresponding to a solid fraction reaching 90%; and
*t*₄₀ denotes time corresponding to a solid fraction reaching 40%.
